# EUROPEAN PATENT APPLICATION

(11) **EP 4 286 541 A1**
(43) Date of publication of application: **06.12.2023**
(21) Application number: 22771478.9
(22) Date of filing: 16.03.2022
(51) Int. Cl.: C21D 7/06, C21D 9/00, C21D 9/46, C22C 38/00, C22C 38/60, C21D 1/18, C23C 8/18

(54) **STEEL SHEET, STEEL MEMBER, AND COATED STEEL MEMBER**

(30) Priority: 17.03.2021 JP 2021043720
(71) Applicant: NIPPON STEEL CORPORATION, Chiyoda-ku Tokyo 100-8071 (JP)
(72) Inventor: TABATA, Shinichiro, Tokyo 100-8071 (JP); KUSUMI, Kazuhisa, Tokyo 100-8071 (JP)
(74) Representative: Zimmermann & Partner Patentanwälte mbB
(86) International application number: PCT/JP2022/011972
(87) International publication number: WO 2022/196733

(57) **Abstract**

This steel sheet includes: a base steel sheet having a predetermined chemical composition; and a scale formed on a surface of the base steel sheet, in which the base steel sheet has a decarburized layer formed on a side of an interface with the scale, the decarburized layer has an internal oxidized layer formed on the side of the interface with the scale, a depth of the decarburized layer from an interface between the base steel sheet and the scale is 90 µm or more, a depth of the internal oxidized layer from the interface is less than 30 µm, and the scale contains 80% or more of Fe by mass%.

## Description

### [Technical Field of the Invention]

The present invention relates to a steel sheet, a steel member, and a coated steel member.

Priority is claimed on Japanese Patent Application No. 2021-043720, filed March 17, 2021, the content of which is incorporated herein by reference.

### [Related Art]

In the field of steel sheets for vehicles, against the background of tightening of recent environmental regulations and collision safety standards, the application of steel sheets having high tensile strength (high strength steel sheets) has expanded in order to improve both fuel efficiency and collision safety. However, press formability of a steel sheet decreases with high-strengthening, which makes it difficult to manufacture a product having a complex shape.

Specifically, ductility of the steel sheet decreases with the high-strengthening, and there is a problem in that the steel sheet is fractured at a highly processed portion in the case of being processed into a complex shape. In addition, with the high-strengthening of the steel sheet, residual stress after processing causes springback and wall warpage, which also causes a problem that dimensional accuracy is deteriorated. Therefore, it is not easy to perform press forming on a steel sheet having high strength, particularly a tensile strength of 780 MPa or more, into a product having a complex shape. Roll forming rather than press forming makes it easier to process a high strength steel sheet, but the application thereof is limited to components having a uniform cross section in a longitudinal direction thereof.

Therefore, in recent years, a hot stamping technique has been adopted as a technique for press-forming a material that is difficult to form, such as a high strength steel sheet. The hot stamping technique is a hot forming technique of heating a material to be subjected to forming and then forming the material.

In this technique, the material is formed after being heated. Therefore, the steel is soft at the time of forming and has good formability. Accordingly, even a high strength steel sheet can be accurately formed into a complex shape. Furthermore, in the hot stamping technique, since quenching is performed simultaneously with forming by a press die, a steel member after the forming has sufficient strength.

For example, according to Patent Document 1, it is disclosed that it is possible to impart a tensile strength of 1,400 MPa or more to a steel member after forming by a hot stamping technique.

On the other hand, vehicles are also required to have collision safety. The collision safety of a vehicle is evaluated by crushing strength and absorbed energy in a collision test of the entire vehicle body or some members. In particular, since the crushing strength largely depends on the material strength, the demand for ultrahigh strength steel members as vehicle members dramatically increases.

However, in general, the steel members decrease in fracture toughness and deformability with high-strengthening. Therefore, the steel member is fractured prematurely during crushing due to a collision or is fractured at a portion on which deformation is concentrated, so that there are cases where crushing strength suitable for the material strength is not exhibited, and a sufficient absorbed energy cannot be obtained. Therefore, in order to improve the collision safety of vehicles, it is required to improve not only the material strength but also the fracture toughness and deformability, that is, improvement of the toughness and bendability of the steel members is required. Therefore, in order to apply a high strength steel member having a tensile strength of more than 1.0 GPa to a vehicle body, there is a need for a technique for providing a steel member having toughness and bendability higher than in the related art and exhibiting sufficient absorbed energy even in the event of a collision accident.

Patent Document 2 discloses a press-formed article that is subjected to hot press forming and has excellent toughness and a tensile strength of 1.8 GPa or more. Patent Document 3 discloses a steel having a tensile strength as extremely high as 2.0 GPa or more, and further having good toughness and ductility. Patent Document 4 discloses a steel having a tensile strength as high as 1.8 GPa or more and further having good toughness. Patent Document 5 discloses a steel having a tensile strength as extremely high as 2.0 GPa or more and further having good toughness.

However, Patent Documents 1 to 5 do not describe regarding bendability, and cannot sufficiently meet higher demands in the use of high strength steels having a tensile strength of more than 1.0 GPa as vehicle members in some cases.

In addition, the steel member is usually applied to a vehicle body by being assembled by welding. Therefore, in a case where an application to a vehicle component is assumed, excellent weldability is required in addition to the above-described high strength and bendability.

### [Prior Art Document]

### [Patent Document]

[Patent Document 1] Japanese Unexamined Patent Application, First Publication No. 2002-102980
[Patent Document 2] Japanese Unexamined Patent Application, First Publication No. 2012-180594
[Patent Document 3] Japanese Unexamined Patent Application, First Publication No. 2012-1802
[Patent Document 4] PCT International Publication No. WO2015/182596
[Patent Document 5] PCT International Publication No. WO2015/182591

### [Disclosure of the Invention]

### [Problems to be Solved by the Invention]

The present invention has been made in view of the above problems. An object of the present invention is to provide a steel member having high strength and excellent bendability and weldability, and a steel sheet suitable as a material for the steel member.

### [Means for Solving the Problem]

The present inventors conducted studies to obtain excellent bendability and weldability in a high strength steel member obtained by performing hot stamping on a steel sheet.

As a result, it was found that by increasing an Fe content in a scale formed on a surface of a steel sheet (base steel sheet) to be subjected to hot stamping, and controlling depths (thicknesses) of an internal oxidized layer and a decarburized layer to appropriate ranges, a steel member obtained by performing hot stamping on the steel sheet can obtain high strength and excellent bendability and weldability.

The present invention has been made in view of the above problems. The gist of the present invention is as follows.
[1] A steel sheet according to an aspect of the present invention includes: a base steel sheet; and a scale formed on a surface of the base steel sheet, in which the base steel sheet contains, as a chemical composition, by mass%, C: 0.10% to 0.65%, Si: 0.10% to 2.00%, Mn: 0.30% to 3.00%, P: 0.050% or less, S: 0.0100% or less, N: 0.010% or less, O: 0.010% or less, Ti: 0% to 0.100%, B: 0% to 0.0100%, Cr: 0% to 1.00%, Mo: 0% to 1.00%, Ni: 0% to 1.00%, Nb: 0% to 0.10%, Cu: 0% to 1.00%, V: 0% to 1.00%, Ca: 0% to 0.010%, Mg: 0% to 0.010%, Al: 0% to 1.00%, Sn: 0% to 1.00%, W: 0% to 1.00%, Sb: 0% to 1.00%, Zr: 0% to 1.00%, Co: 0% to 1.00%, REM: 0% to 0.30%, and a remainder including Fe and impurities, the base steel sheet comprises a decarburized layer formed on a side of an interface with the scale, the decarburized layer comprises an internal oxidized layer formed on the side of the interface with the scale, a depth of the decarburized layer from the interface between the base steel sheet and the scale is 90 µm or more, a depth of the internal oxidized layer from the interface is less than 30 µm, and the scale contains 80% or more of Fe by mass%.
[2] In the steel sheet according to [1], the scale may include, by mass%, a first region containing 80% or more of Fe and 0.1% or more and less than 3.0% of Si, and a second region containing 65% or more and less than 80% of Fe and 0.8% or more and less than 7.5% of Mn.
[3] A steel member according to another aspect of the present invention includes: a steel sheet substrate; and a scale formed on a surface of the steel sheet substrate, in which the steel sheet substrate contains, as a chemical composition, by mass%, C: 0.10% to 0.65%, Si: 0.10% to 2.00%, Mn: 0.30% to 3.00%, P: 0.050% or less, S: 0.0100% or less, N: 0.010% or less, O: 0.010% or less, Ti: 0% to 0.100%, B: 0% to 0.0100%, Cr: 0% to 1.00%, Mo: 0% to 1.00%, Ni: 0% to 1.00%, Nb: 0% to 0.10%, Cu: 0% to 1.00%, V: 0% to 1.00%, Ca: 0% to 0.010%, Mg: 0% to 0.010%, Al: 0% to 1.00%, Sn: 0% to 1.00%, W: 0% to 1.00%, Sb: 0% to 1.00%, Zr: 0% to 1.00%, Co: 0 to 1.00%, REM: 0% to 0.30%, and a remainder including Fe and impurities, the steel sheet substrate comprises a decarburized layer formed on a side of an interface with the scale, the decarburized layer comprises an internal oxidized layer formed on the side of the interface with the scale, a depth of the decarburized layer from the interface between the steel sheet substrate and the scale is 60 µm or more, a depth of the internal oxidized layer from the interface is less than 40 µm, and the scale contains 70% or more of Fe by mass%.
[4] A coated steel member according to another aspect of the present invention includes: a steel sheet substrate; and a coating containing Al and Fe formed on a surface of the steel sheet substrate, in which the steel sheet substrate contains, as a chemical composition, by mass%, C: 0.10% to 0.65%, Si: 0.10% to 2.00%, Mn: 0.30% to 3.00%, P: 0.050% or less, S: 0.0100% or less, N: 0.010% or less, O: 0.010% or less, Ti: 0% to 0.100%, B: 0% to 0.0100%, Cr: 0% to 1.00%, Mo: 0% to 1.00%, Ni: 0% to 1.00%, Nb: 0% to 0.10%, Cu: 0% to 1.00%, V: 0% to 1.00%, Ca: 0% to 0.010%, Mg: 0% to 0.010%, Al: 0% to 1.00%, Sn: 0% to 1.00%, W: 0% to 1.00%, Sb: 0% to 1.00%, Zr: 0% to 1.00%, Co: 0% to 1.00%, REM: 0% to 0.30%, and a remainder including Fe and impurities, the steel sheet substrate comprises a decarburized layer formed on a side of the coating, the decarburized layer comprises an internal oxidized layer formed on the side of the coating, a depth of the decarburized layer from an interface between the steel sheet substrate and the coating is 30 µm or more, a depth of the internal oxidized layer from the interface is less than 20 µm, and no scale is included between the steel sheet substrate and the coating containing Al and Fe.

### [Effects of the Invention]

According to the above aspects of the present invention, it is possible to provide a steel member (including a coated steel member) having high strength and excellent bendability and weldability and a steel sheet suitable as a material for the steel member.

### [Brief Description of the Drawings]

FIG. 1 is a schematic view showing an example of a steel sheet according to the present embodiment.
FIG. 2 is a schematic view showing an example of a steel member according to the present embodiment.
FIG. 3 is a schematic view showing an example of another aspect (coated steel member) of the steel member according to the present embodiment.

### [Embodiments of the Invention]

Hereinafter, a steel sheet (a steel sheet according to the present embodiment) and a steel member (including a coated steel member) (a steel member according to the present embodiment) according to an embodiment of the present invention, and a preferable manufacturing method thereof will be described.

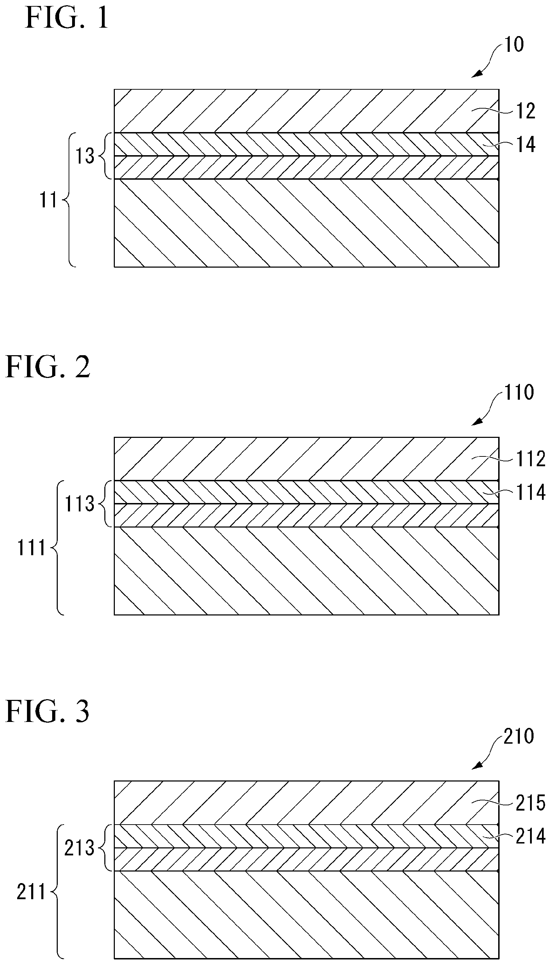

Next, the steel sheet according to the present embodiment will be described. As shown in FIG. 1, a steel sheet 10 according to the present embodiment includes a base steel sheet 11 having a chemical composition described below and a scale 12 formed on a surface of the base steel sheet 11 and containing 80 mass% or more of Fe. In addition, the base steel sheet 11 has a decarburized layer 13 having a predetermined depth on a side of an interface (a region in contact with an interface) with the scale 12, and the decarburized layer 13 has an internal oxidized layer 14 on the side of the interface between the base steel sheet 11 and the scale 12.

Although only the scale on one surface is shown in FIG. 1, the scale may be formed on both surfaces. In this case, the decarburized layer 13 and the internal oxidized layer 14 are formed on regions in contact with both interfaces of the base steel sheet 11 with the scale.

In the present embodiment, a "scale side" indicates a "scale side in a sheet thickness direction of the base steel sheet", and the "side of the interface with the scale" indicates an "side of the interface (a region in contact with the interface)" between the base steel sheet and the scale in the sheet thickness direction of the base steel sheet.

### <Base Steel Sheet>

### [Chemical Composition]

In a numerically limited range including "to" described below, values on both sides are included in the range as a lower limit and an upper limit. Numerical values indicating "more than" or "less than" do not fall within the numerical range. "%" regarding an amount of each element indicates "mass%" unless otherwise specified.

### C: 0.10% to 0.65%

C is an element that enhances hardenability of steel and improves strength of the steel member after hot stamping (obtained by performing hot stamping on the steel sheet). However, when a C content is less than 0.10%, it becomes difficult to secure sufficient strength (more than 1.0 GPa) in the steel member after hot stamping (the steel member obtained by performing hot stamping on the steel sheet). Therefore, the C content is set to 0.10% or more. The C content is preferably 0.15% or more, and more preferably 0.26% or more.

On the other hand, when the C content is more than 0.65%, the strength of the steel member after hot stamping becomes too high, and deterioration of bendability becomes significant. In addition, weldability also deteriorates. Therefore, the C content is set to 0.65% or less. The C content is preferably 0.60% or less.

### Si: 0.10% to 2.00%

Si is an element that is effective for enhancing the hardenability of steel and stably securing the strength of the steel member after hot stamping. In order to obtain this effect, a Si content needs to be set to 0.10% or more. The Si content is preferably 0.35% or more.

On the other hand, when the Si content in the steel sheet is more than 2.00%, a heating temperature required for austenitic transformation becomes significantly high during a heat treatment. This may lead to an increase in a cost required for the heat treatment. Furthermore, when the Si content is more than 2.00%, toughness of a quenched portion deteriorates. Therefore, the Si content is set to 2.00% or less. The Si content is preferably 1.60% or less.

### Mn: 0.30% to 3.00%

Mn is an element that is very effective for enhancing the hardenability of steel and stably securing the strength of the steel member after hot stamping. Mn is an element that further lowers an Ac3 point and promotes lowering of a quenching treatment temperature. In addition, Mn is an element having an effect of improving corrosion resistance by being diffused into an Al-Fe-based coating. When a Mn content is less than 0.30%, these effects are not sufficient, so that the Mn content is set to 0.30% or more. The Mn content is preferably 0.40% or more.

On the other hand, when the Mn content is more than 3.00%, the above effects are saturated, and the toughness and bendability of the quenched portion deteriorate. Therefore, the Mn content is set to 3.00% or less. The Mn content is preferably 2.80% or less, and more preferably 2.50% or less.

### P: 0.050% or Less

P is an element that deteriorates toughness of the steel member after hot stamping. In particular, when a P content is more than 0.050%, the deterioration of toughness becomes significant. Therefore, the P content is limited to 0.050% or less. The P content is preferably limited to 0.005% or less. Since the P content is preferably as small as possible, the P content may be 0%. However, from the viewpoint of cost, the P content may be set to 0.001% or more.

### S: 0.0100% or Less

S is an element that deteriorates the toughness and bendability of the steel member after hot stamping. In particular, when a S content is more than 0.0100%, the deterioration of the toughness and bendability becomes significant. Therefore, the S content is limited to 0.0100% or less. The S content is preferably limited to 0.0050% or less. Since the S content is preferably as small as possible, the S content may be 0%. However, from the viewpoint of cost, the S content may be set to 0.0001% or more.

### N: 0.010% or Less

N is an element that deteriorates the toughness of the steel member after hot stamping. In particular, when a N content is more than 0.010%, coarse nitrides are formed in the steel, and the toughness is significantly deteriorated. Therefore, the N content is set to 0.010% or less. A lower limit of the N content does not need to be particularly limited and may be 0%. However, setting the N content to less than 0.0002% leads to an increase in steelmaking cost and is economically undesirable. Therefore, the N content may be set to 0.0002% or more, or 0.0008% or more.

### O: 0.010% or Less

O is an element that deteriorates the toughness of the steel member after hot stamping. In particular, when an O content is more than 0.010%, coarse oxides are formed in the steel, and the toughness is significantly deteriorated. Therefore, the O content is set to 0.010% or less. A lower limit of the O content does not need to be particularly limited and may be 0%. However, setting the O content to less than 0.0002% leads to an increase in steelmaking cost and is economically undesirable. Therefore, the O content may be set to 0.0002% or more, or 0.0008% or more.

In order to improve the strength, toughness, bendability, corrosion resistance, and deoxidation, the steel member according to the present embodiment may also contain one or more elements selected from Ti, B, Cr, Mo, Ni, Nb, Cu, V, Ca, Mg, Al, Sn, W, Sb, Zr, Co, and REM described below, in addition to the above elements. These elements are optional elements and do not necessarily have to be contained. Therefore, lower limits thereof are 0%.

### Ti: 0 to 0.100%

Ti is an element having an action of suppressing recrystallization when the steel sheet is subjected to a heat treatment by being heated to a temperature of the Ac3 point or higher, and suppressing grain growth by forming fine carbides, thereby refining austenite grains. Therefore, by including Ti, an effect of greatly improving the toughness of the steel member after hot stamping can be obtained. In addition, Ti is an element that suppresses consumption of B due to precipitation of BN by being preferentially bonded to N in the steel and promotes an effect of improving the hardenability by B, which will be described later. Therefore, Ti may be contained. In a case of sufficiently obtaining the above effects, a Ti content is preferably set to 0.010% or more. The Ti content is more preferably 0.020% or more.

On the other hand, when the Ti content is more than 0.100%, the amount of TiC precipitated increases and C is consumed, resulting in a decrease in the strength of the steel member after hot stamping. Therefore, the Ti content is set to 0.100% or less. The Ti content is preferably 0.080% or less.

### B: 0% to 0.0100%

B is an element having an action of dramatically improving the hardenability of the steel even in a small amount. In addition, B is an element that strengthens grain boundaries and enhances the toughness by being segregated at the grain boundaries, and is an element that suppresses the growth of austenite grains when the steel sheet is heated. Therefore, B may be contained. In a case of sufficiently obtaining the above effects, a B content is preferably set to 0.0010% or more. The B content is more preferably 0.0020% or more.

On the other hand, when the B content is more than 0.0100%, a large amount of coarse compounds are precipitated, and the toughness of the steel member after hot stamping deteriorates. Therefore, in a case where B is contained, the B content is set to 0.0100% or less. The B content is preferably 0.0080% or less.

### Cr: 0% to 1.00%

Cr is an element effective for increasing the hardenability of steel, and stably securing the strength of the steel member after hot stamping. Therefore, Cr may be contained. In a case of obtaining the above effects, a Cr content is preferably set to 0.01% or more. The Cr content is more preferably 0.05% or more, and even more preferably 0.08% or more.

However, when the Cr content is more than 1.00%, the above effects are saturated and the cost increases. Moreover, since Cr has an action of stabilizing iron carbides, when the Cr content is more than 1.00%, there are cases where coarse iron carbides remain undissolved when the steel sheet is heated, and the toughness of the steel member after hot stamping deteriorates. Therefore, in a case where Cr is contained, the Cr content is set to 1.00% or less. The Cr content is preferably 0.80% or less.

### Mo: 0% to 1.00%

Mo is an element effective for increasing the hardenability of steel, and stably securing the strength of the steel member after hot stamping. Therefore, Mo may be contained. In a case of obtaining the above effects, a Mo content is preferably set to 0.01% or more. The Mo content is more preferably 0.05% or more.

However, when the Mo content is more than 1.00%, the above effects are saturated and the cost increases. Moreover, since Mo has an action of stabilizing iron carbides, when the Mo content is more than 1.00%, there are cases where coarse iron carbides remain undissolved when the steel sheet is heated, and the toughness of the steel member after hot stamping deteriorates. Therefore, in a case where Mo is contained, the Mo content is set to 1.00% or less. The Mo content is preferably 0.80% or less.

### Ni: 0% to 1.00%

Ni is an element effective for increasing the hardenability of steel, and stably securing the strength of the steel member after hot stamping. Therefore, Ni may be contained. In a case of obtaining the above effects, a Ni content is preferably set to 0.01% or more. The Ni content is more preferably 0.10% or more.

However, when the Ni content is more than 1.00%, the above effects are saturated and economic efficiency is lowered. Therefore, in a case where Ni is contained, the Ni content is set to 1.00% or less.

### Nb: 0% to 0.10%

Nb is an element having an action of forming fine carbides and increasing the toughness of steel due to the refining effect. Therefore, Nb may be contained. In a case of sufficiently obtaining the above effects, a Nb content is preferably set to 0.02% or more. The Nb content is more preferably 0.03% or more.

On the other hand, when the Nb content is more than 0.10%, the carbides become coarse and the toughness of the steel member deteriorates. Therefore, the Nb content is set to 0.10% or less. The Nb content is preferably 0.08% or less.

### Cu: 0% to 1.00%

Cu is an element effective for increasing the hardenability of steel, and stably securing the strength of the steel member after hot stamping. Therefore, Cu may be contained. In addition, Cu is an element having an effect of improving the corrosion resistance of the steel member. In a case of obtaining the above effects, a Cu content is preferably set to 0.01% or more. The Cu content is more preferably 0.05% or more.

However, when the Cr content is more than 1.00%, the above effects are saturated and the cost increases. Therefore, in a case where Cu is contained, the Cu content is set to 1.00% or less. The Cu content is preferably 0.80% or less.

### V: 0% to 1.00%

V is an element that forms fine carbides and increases the toughness of steel due to the refining effect. Therefore, V may be contained. In a case of obtaining the above effects, a V content is preferably set to 0.01% or more. The V content is more preferably 0.10% or more.

However, when the V content is more than 1.00%, the above effects are saturated and the economic efficiency is lowered. Therefore, in a case where V is contained, the V content is set to 1.00% or less.

### Ca: 0% to 0.010%

Ca is an element having an effect of refining inclusions in steel and improving toughness after hot stamping. Therefore, Ca may be contained. In a case of obtaining the above effects, a Ca content is preferably set to 0.001% or more. The Ca content is more preferably 0.002% or more.

However, when the Ca content is more than 0.010%, the effects are saturated and the cost increases. Therefore, in a case where Ca is contained, the Ca content is set to 0.010% or less. The Ca content is preferably 0.005% or less, and more preferably 0.004% or less.

### Mg: 0% to 0.010%

Mg is an element having an effect of refining inclusions in steel and improving the toughness of the steel member after hot stamping. Therefore, Mg may be contained. In a case of obtaining the above effects, a Mg content is preferably set to 0.001% or more. The Mg content is more preferably 0.002% or more.

However, when the Mg content is more than 0.010%, the effects are saturated and the cost increases. Therefore, in a case where Mg is contained, the Mg content is set to 0.010% or less. The Mg content is preferably 0.005% or less, and more preferably 0.004% or less.

### Al: 0% to 1.00%

Al is an element generally used as a steel deoxidizing agent. Therefore, Al may be contained. In order to obtain the above effect, an Al content is preferably set to 0.01% or more.

However, when the Al content is more than 1.00%, the above effect is saturated and the economic efficiency is lowered. Therefore, in a case where Al is contained, the Al content is set to 1.00% or less.

### Sn: 0% to 1.00%

Sn is an element that improves corrosion resistance in a corrosive environment. Therefore, Sn may be contained. In a case of obtaining the above effect, a Sn content is preferably set to 0.01% or more.

On the other hand, when the Sn content is more than 1.00%, grain boundary strength decreases, and the toughness of the steel member after hot stamping deteriorates. Therefore, in a case where Sn is contained, the Sn content is set to 1.00% or less.

### W: 0% to 1.00%

W is an element that makes it possible to increase the hardenability of steel and stably secure the strength of the steel member after hot stamping. Therefore, W may be contained. In addition, W is an element that improves corrosion resistance in a corrosive environment. In a case of obtaining the above effects, a W content is preferably set to 0.01% or more.

However, when the W content is more than 1.00%, the above effects are saturated and the economic efficiency is lowered. Therefore, in a case where W is contained, the W content is set to 1.00% or less.

### Sb: 0% to 1.00%

Sb is an element that improves corrosion resistance in a corrosive environment. Therefore, Sb may be contained. In order to obtain the above effect, a Sb content is preferably set to 0.01% or more.

However, when the Sb content is more than 1.00%, the grain boundary strength decreases, and the toughness of the steel member after hot stamping deteriorates. Therefore, in a case where Sb is contained, the Sb content is set to 1.00% or less.

### Zr: 0% to 1.00%

Zr is an element that improves corrosion resistance in a corrosive environment. Therefore, Zr may be contained. In order to obtain the above effect, a Zr content is preferably set to 0.01% or more.

On the other hand, when the Zr content is more than 1.00%, the grain boundary strength decreases, and hydrogen embrittlement resistance of the steel member after hot stamping decreases. Therefore, in a case where Zr is contained, the Zr content is set to 1.00% or less.

### Co: 0% to 1.00%

Co is an element that improves corrosion resistance in a corrosive environment. Therefore, Co may be contained. In a case of obtaining the above effect, a Co content is preferably set to 0.01% or more.

However, when the Co content is more than 1.00%, the above effect is saturated and the economic efficiency is lowered. Therefore, in a case where Co is contained, the Co content is set to 1.00% or less.

### REM: 0% to 0.30%

Like Ca, REM is an element having an effect of refining inclusions in steel and improving the toughness of the steel member after hot stamping. Therefore, REM may be contained. In order to obtain the above effects, a REM content is preferably set to 0.01 % or more. The REM content is more preferably 0.02% or more.

However, when the REM content is more than 0.30%, the effects are saturated and the cost increases. Therefore, in a case where REM is contained, the REM content is set to 0.30% or less. The REM content is preferably 0.20% or less.

Here, REM refers to a total of 17 elements of Sc, Y, and lanthanoids such as La and Nd, and the REM content indicates the total amount of these elements. REM is added to molten steel using, for example, an Fe-Si-REM alloy, and this alloy contains, for example, La, Nd, Ce, and Pr.

In the chemical composition of the base steel sheet of the steel sheet of the present embodiment, the remainder other than the elements described above includes Fe and impurities.

Here, the "impurities" are elements that are incorporated due to various factors including raw materials such as ore and scrap and a manufacturing process when the steel sheet is industrially manufactured, and are acceptable in a range without adversely affecting the properties of the steel sheet according to the present embodiment and the steel member according to the present embodiment.

The chemical composition of the base steel sheet can be obtained by the following method.

The chemical composition of the base steel sheet is obtained by cutting out an analysis sample from the base steel sheet and performing elemental analysis such as inductively coupled plasma (ICP) atomic emission spectrometry. In addition, C and S may be measured using a combustion-infrared absorption method, N may be measured using an inert gas fusion-thermal conductivity method, and O may be measured using an inert gas fusion-non-dispersive infrared absorption method.

The analysis sample is collected so as to obtain an average chemical composition of the overall sheet thickness of the base steel sheet, as described in JIS G 0417:1999. Specifically, the analysis sample is collected from a 1/4 thickness position in the sheet thickness direction from the surface of the base steel sheet, avoiding end portions of the base steel sheet in a width direction.

### [Decarburized Layer]

### [Internal oxidized Layer]

As shown in FIG. 1, the base steel sheet 11 included in the steel sheet 10 according to the present embodiment has the decarburized layer 13 on the scale 12 side (the side of the interface between the base steel sheet 11 and the scale 12). That is, a portion of the base steel sheet 11 on the scale 12 side is the decarburized layer 13. In addition, the decarburized layer 13 has the internal oxidized layer 14 on the scale 12 side. That is, a portion of the decarburized layer 13 on the scale 12 side is the internal oxidized layer 14. A depth (distance from the interface in the sheet thickness direction) of the internal oxidized layer 14 from the interface between the base steel sheet 11 and the scale 12 in a cross section in the sheet thickness direction is less than 30 µm. A depth (distance from the interface in the sheet thickness direction) of the decarburized layer 13 from the interface between the base steel sheet 11 and the scale 12 in the cross section in the sheet thickness direction is 90 µm or more.

In the steel member obtained by performing hot stamping on the steel sheet, it is extremely effective to decarburize and soften a surface layer in order to improve the bendability. Since stress and strain generated in bending deformation are larger in a surface layer outside a bend, the bendability can be improved by softening the surface layer and improving a fracture limit.

In the steel sheet 10 according to the present embodiment, in order to form a decarburized layer on a surface layer of the steel member after hot stamping, the decarburized layer 13 having a depth (thickness) of 90 µm or more from the interface is formed on the side of the interface with the scale 12 described later, in the base steel sheet 11. When the depth (thickness) of the decarburized layer 13 is less than 90 µm, the decarburized layer is not formed to a sufficient depth in the steel sheet substrate of the steel member after hot stamping, and the bendability of the steel member decreases. Although the surface of the base steel sheet undergoes carbon restoration by hot stamping and the depth of the decarburized layer decreases, by setting the depth of the decarburized layer of the base steel sheet 11 to 90 µm or more, the depth of the decarburized layer of the steel member after hot stamping can be set to 60 µm or more under normal hot stamping conditions.

As described above, as a technique for decarburizing the surface layer of the steel sheet, a method of annealing a steel sheet at a high dew point and decarburizing the steel sheet with H₂O in an atmosphere (high dew point annealing) is known. However, as a result of studies by the present inventors, it was found that in a case where such high dew point annealing is performed, internal oxidation (oxidation of easily oxidizable elements such as Si and Mn in steel) that occurs simultaneously with decarburization causes various problems. Specifically, it was found that in the steel member obtained by hot stamping, there are cases where scale (internal scale) is generated inside the steel sheet from the internal oxidized layer as an origin during hot stamping, and the scale generated from the inside of the steel sheet impairs weldability.

As a result of further studies by the present inventors, it was found that in the steel sheet (base steel sheet 11) to be subjected to hot stamping, by setting the depth of the internal oxidized layer 14 to less than 30 µm, the generation of the scale inside the steel sheet during hot stamping can be suppressed. Therefore, in the steel sheet 10 according to the present embodiment, the depth (thickness) of the internal oxidized layer 14 of the base steel sheet 11 from the interface between the base steel sheet 11 and the scale 12 is set to less than 30 µm.

The depth of the internal oxidized layer is preferably less than 5 µm. In this case, the bendability is further improved.

In order to suppress the depth of the internal oxidized layer 14 while securing the depth of the decarburized layer 13, it is necessary to control annealing conditions as described below.

In addition, it is preferable that a ratio of the depth (thickness) of the decarburized layer to the depth (thickness) of the internal oxidized layer satisfies a relationship of 3 or more (thickness of decarburized layer / thickness of internal oxidized layer ≥ 3). In this case, the bendability described later is even further improved. More preferably, the ratio is 10 or more. Even more preferably, the ratio is 20 or more.

The depth of the decarburized layer 13 from the interface between the base steel sheet 11 and the scale 12 can be obtained by the following method using glow discharge emission spectroscopy (GDS).

GDS is performed from the surface of the steel sheet in the sheet thickness direction to obtain the depth of the decarburized layer. In the GDS measurement, at a 1/4 width (lateral) position from an end portion of the steel sheet in the width direction, the C content and the Fe content are measured in the sheet thickness direction from the surface (surface of the scale) at a pitch of 50 nm or less. As a result of the measurement, a position at which the Fe content becomes 95% or more for the first time is defined as the interface between the base steel sheet and the scale. In addition, a position at which the C content obtained by the GDS analysis becomes a C content at a 1/4 thickness position from the surface of the base steel sheet described above is defined as the deepest position of the decarburized layer. A distance from the interface between the base steel sheet and the scale to the deepest position of the decarburized layer is defined as the depth of the decarburized layer from the interface between the base steel sheet and the scale (thickness of the decarburized layer). Here, the above measurement is performed five times at different locations, and an average value of the five times is defined as the depth of the decarburized layer of the steel sheet according to the present embodiment from the interface between the base steel sheet and the scale (also called whole decarburization depth).

In a case where the decarburized layer is deep enough to exceed a measurement limit of GDS, the depth of the decarburized layer may be obtained from microscopic observation as described in JIS G 0558 (2007). In this case, a sample for cross section observation is collected from the 1/4 width (lateral) position in the width direction from the end portion of the steel sheet in the width direction, this sample is subjected to nital etching, and cross section observation is performed with an optical microscope. A depth at which a structure equivalent to that at the 1/4 thickness position from the surface of the base steel sheet (interface with the scale) is measured, and the depth at that position is defined as the depth of the decarburized layer. Here, the measurement is performed five times at different locations, and an average value of the 5 times is defined as the depth of the decarburized layer.

The depth of the internal oxidized layer from the interface between the base steel sheet and the scale is obtained by observing the cross section of the steel sheet with a scanning electron microscope (SEM).

A sample for cross section observation is collected from the 1/4 width (lateral) position from the end portion of the steel sheet in the width direction, and a COMPO image is observed by the SEM. Internal oxidation proceeds deeper in the grain boundaries than in the grains, and appears darker than in a steady portion (high Fe content) of the base steel sheet in the COMPO image. Therefore, the internal oxidized layer is identified by color difference, and the deepest depth of the internal oxidized layer from the interface between the base steel sheet and the scale is measured. Here, the above measurement is performed five times at different locations, and an average value of the five times is defined as the depth of the internal oxidized layer of the steel sheet according to the present embodiment from the interface with the scale.

### [Scale]

The steel sheet according to the present embodiment has the scale formed on the surface of the base steel sheet. In the steel sheet according to the present embodiment, as will be described later, the base steel sheet is decarburized by utilizing O in the scale formed on the surface of the base steel sheet by rolling or the like. Therefore, in the scale after the decarburization occurs, the O content is significantly lower than that of a normal scale usually formed by hot rolling or the like, which is formed of FeO, Fe₂O₃, Fe₃O₄, or the like, and 80% or more of Fe is contained by mass%.

That is, by performing decarburization under a condition in which the Fe content of the scale is 80% or more, a steel sheet having the internal oxidized layer and the decarburized layer having the above-described depths can be obtained.

In other words, although there are cases where the scale is removed or the scale is peeled off during processing or the like of the steel sheet, the steel sheet in which the depths of the internal oxidized layer and the decarburized layer are in the above ranges can be considered to have had scale equivalent to the scale included in the steel sheet according to the present embodiment.

In addition, the thickness of the scale is preferably set to 5 µm or more in terms of supplying O for decarburization. The thickness of the scale is more preferably 8 µm or more, and even more preferably 10 µm or more. In terms of a yield of the steel sheet, the thickness of the scale is preferably less than 100 µm. The thickness of the scale is more preferably 50 µm or less or 30 µm or less.

The scale included in the steel sheet according to the present embodiment preferably includes, by mass%, a first region containing 80% or more of Fe and 0.1% or more and less than 3.0% of Si, and a second region containing 65% or more and less than 80% of Fe and 0.8% or more and less than 7.5% of Mn. Substantially, the scale preferably composed of the first region and the second region. However, as the scale, there may be a case where an impurity, an oxide primarily containing Cr, Si, or the like, or a simple element of a hard-to-oxidize element such as Cu, is present in an outermost layer as "other regions".

By including the scale having such a configuration, a current limit at which splash occurs during spot welding when a vehicle body is assembled is increased, and a steel sheet having a wide appropriate current range, that is, good weldability can be obtained.

There are cases where the first region contains C, Ni, Cr, Mo, and the like in addition to Fe, Si, and O. There are cases where the second region contains C, Ni, and the like in addition to Fe, Mn, and O.

In a case where the first region and the second region are present, there is often a case where the first region is a matrix, and the second region is present in a form in an island shape in the matrix. The second region may have a form in which the second region is dispersed in an island shape, or some islands are joined together. In either case, the first region and the second region can be distinguished from each other by a method described below.

The Fe content of the scale is obtained by the following method. Glow discharge emission spectroscopy (GDS) is performed from the surface in the sheet thickness direction at the 1/4 width (lateral) position from the end portion of the steel sheet in the width direction, and the Fe content and the O content of the scale are obtained. A region where the O content is 0.1% or more is removed as an impurity, and an average value of the Fe contents in regions where the O content is less than 0.1% from the surface is measured. The measurement is performed five times at different locations, and an average value of the five times is defined as the Fe content of the scale.

The Fe content and Si content in the first region of the scale, and the Fe content and Mn content in the second region are obtained using the scanning electron microscope (SEM) and an electron probe micro-analyzer (EPMA). A sample is collected from the 1/4 width (lateral) position in the width direction from the end portion of the steel sheet in the width direction so that a cross section of the steel sheet in the sheet thickness direction can be observed. For this sample, a COMPO image is acquired using the scanning electron microscope, and the presence of two types of structures having different contrasts constituting the scale is confirmed. Since the first region contains a larger amount of Fe, which is a heavy element, than the second region, the first region looks brighter than the second region. Therefore, a relatively bright region is determined to be the first region, and a relatively dark region is determined to be the second region. For each of the two types of structures (the first region and the second region), elemental analysis of spots (beam diameter of 1 µm or less) is performed using the electron probe micro-analyzer (EPMA), whereby the Fe content and the Si content included in the first region of the scale, and the Fe content and Mn content included in the second region can be obtained. In the measurement, 10 points are analyzed for each of the contents, and average values thereof are determined to be the Fe and Si contents included in the first region of the scale and the Fe content and the Mn content included in the second region. There are cases where the scale includes "other regions" as described above. A region containing Cr, Si, or Cu in an amount of 10 mass% or more is referred to as the "other regions" described above.

The thickness of the scale is obtained by the SEM. A sample for cross section observation is collected from the 1/4 width (lateral) position in the width direction from the end portion of the steel sheet in the width direction, and a composition (COMPO) image is observed by the SEM. Scale thicknesses are measured at 10 points where the scale is not peeled off, and an average value thereof is determined to be the thickness of the scale.

### <Steel Member>

As shown in FIG. 2, a steel member 110 according to the present embodiment includes a steel sheet substrate 111 having a predetermined chemical composition and a scale 112 formed on a surface of the steel sheet substrate 111 and containing 70 mass% or more of Fe. In addition, the steel sheet substrate 111 has a decarburized layer 113 formed on a scale 112 side (a side of the interface with the scale 112) and having a predetermined depth, and the decarburized layer 113 has an internal oxidized layer 114 formed on the scale 112 side.

In addition, the steel member 110 according to the present embodiment is obtained by subjecting the steel sheet 10 according to the present embodiment described above to a heat treatment (and processing) such as hot stamping.

In the figure, the steel member 110 according to the present embodiment is shown in the form of a flat sheet, but the steel member 110 is a member obtained by hot stamping and is not limited to the flat sheet.

### [Chemical Composition]

Since the chemical composition of the steel sheet does not substantially change by the hot stamping, the chemical composition of the steel sheet substrate 111 of the steel member 110 according to the present embodiment is the same as the chemical composition of the base steel sheet 11 of the steel sheet 10 according to the present embodiment, and can be measured by the same measurement method as that of the base steel sheet.

### [Decarburized Layer]

### [Internal oxidized Layer]

In the steel member 110 according to the present embodiment, the decarburized layer is present on the side of the interface with the scale 112, in the steel sheet substrate 111, and the internal oxidized layer 114 is present on the side of the interface with the scale 112, in the decarburized layer 113. In addition, the depth of the decarburized layer 113 from an interface between the steel sheet substrate 111 and the scale 112 is 60 µm or more, and a depth of the internal oxidized layer 114 from the interface between the steel sheet substrate 111 and the scale 112 is less than 40 µm.

In order to improve the bendability of the steel member, it is extremely effective to decarburize and soften a surface layer. Since stress and strain generated in bending deformation are larger in a surface layer outside a bend, the bendability can be improved by softening the surface layer and improving a fracture limit.

When the depth (thickness) of the decarburized layer 113 formed on the surface layer of the steel member 110 according to the present embodiment is 60 µm or more, the bendability is improved. Therefore, the depth of the decarburized layer 113 from the interface between the steel sheet substrate 111 and the scale 112 is set to 60 µm or more.

In addition, in the steel member, when the depth of the internal oxidized layer is 40 µm or more, the weldability deteriorates due to the scale formed inside the steel sheet during hot stamping. Therefore, the depth of the internal oxidized layer 114 is set to less than 40 µm.

### <Scale>

The steel member 110 according to the present embodiment has the scale 112 formed on the surface of the steel sheet substrate 111. The steel member 110 according to the present embodiment is obtained by performing hot stamping on the steel sheet having the scale containing 80 mass% or more of Fe. Although the surface layer of the scale is oxidized by the hot stamping, the scale 112 included in the steel member 110 according to the present embodiment contains 70% or more of Fe by mass%.

A steel member according to another embodiment of the present invention may be a coated steel member obtained by subjecting the steel sheet according to the present embodiment described above to pickling or the like to remove the scale on the surface, then forming a coating containing Al, such as plating, on the steel sheet to obtain a coated steel sheet, and subjecting the coated steel sheet to a heat treatment such as hot stamping.

In this case, as shown in FIG. 3, a steel member (coated steel member) 210 according to another embodiment of the present invention includes a steel sheet substrate 211 and a coating 215 containing Al and Fe formed on a surface of the steel sheet substrate 211 and, and no scale is included between the steel sheet substrate 211 and the coating 215 containing Al and Fe.

In addition, the steel sheet substrate 211 has a decarburized layer 213 formed on a side of a coating 215, the decarburized layer 213 has an internal oxidized layer 214 formed on the side of the coating 215, a depth of the decarburized layer 213 from an interface between the steel sheet substrate 211 and the coating 215 is 30 µm or more, and a depth of the internal oxidized layer 214 from the interface between the steel sheet substrate 211 and the coating 215 is less than 20 µm.

When the depth (thickness) of the decarburized layer 213 is 30 µm or more, the bendability is improved. In addition, when the depth of the internal oxidized layer 214 is less than 20 µm, the weldability is improved.

In the case of the coated steel member having the coating, an oxidation state of the surface during a heat treatment such as hot stamping is different from that of the above-described steel member having no coating, and thus the depth of the decarburized layer and the depth of the internal oxidized layer are different.

### <Manufacturing Method>

The steel sheet according to the present embodiment and the steel member according to the present embodiment can obtain the effects as long as the above-described properties are provided regardless of a manufacturing method. However, the steel sheet according to the present embodiment and the steel member according to the present embodiment can be stably manufactured by a manufacturing method including the following steps ((I) to (IV) for the steel sheet and (I) to (V) for the steel member), which is preferable:
(I) a steel piece manufacturing step of manufacturing a steel piece having a predetermined chemical composition;
(II) a hot rolling step of heating the steel piece and performing hot rolling on the steel piece to obtain a hot-rolled steel sheet;
(III) a coiling step of coiling the hot-rolled steel sheet to obtain a hot-rolled coil;
(IV) an annealing step of performing box annealing (BAF) on the hot-rolled coil on which a hot-rolled scale is formed; and
(V) a heat treatment step of cutting out a blank having a predetermined size from the hot-rolled coil after the annealing step and performing a heat treatment on the blank to obtain a steel member.

Hereinafter, each step will be described. Steps and conditions that are not described below can be appropriately performed by known methods.

### (1) Steel Piece Manufacturing Step

In the steel piece manufacturing step, a steel piece such as a slab having the above-described preferable chemical composition is manufactured. Molten steel adjusted to a predetermined chemical composition under known conditions may be made into a steel piece by continuous casting or the like.

### (II) Hot Rolling Step

In the hot rolling step, the obtained steel piece is heated and hot-rolled to obtain a hot-rolled steel sheet. In the hot rolling step, a scale (hot-rolled scale) is formed on a surface of the steel sheet.

Hot rolling conditions are not particularly limited and may be appropriately set within a known condition range according to the required properties of the steel sheet.

### (III) Coiling Step

In the coiling step, the hot-rolled steel sheet obtained in the hot rolling step is coiled into a coil shape to obtain a hot-rolled coil.

Conditions such as a coiling temperature are not particularly limited.

### (IV) Annealing Step

In the annealing step, the hot-rolled coil having the hot-rolled scale formed on the surface thereof is subjected to box annealing (BAF) without performing scale removal (in a so-called mill scale state).

In the annealing, an annealing atmosphere is set to an inert gas atmosphere (N₂ atmosphere, H₂ atmosphere, or the like), and annealing is performed at 650°C to 900°C for 4 to 16 hours. In normal decarburization annealing, high dew point annealing is performed, and H₂O in the atmosphere is used as a decarburization source. Contrary to this, in the present embodiment, by annealing the hot-rolled coil in a state of having the hot-rolled scale attached thereto, decarburization is performed using O in the scale as a decarburization source. Specifically, C in the outermost layer of the base steel sheet reacts with O in the scale to become CO gas, whereby decarburization occurs. In addition, subsequently, deficient C is supplied from the inside of the base steel sheet to the outermost layer, and C becomes CO gas, whereby the decarburization reaction further proceeds. At this time, O in the scale is consumed, and the Fe content in the scale increases.

However, when an annealing temperature is lower than 650°C or an annealing time is shorter than four hours, decarburization does not proceed sufficiently. On the other hand, when the annealing temperature is higher than 900°C or the annealing time is longer than 16 hours, the scale reduction reaction is completed, and the supply of C from the inside of the steel sheet to the surface layer continues thereafter, so that the decarburization weakens. In addition, when the generated CO gas stays around the scale, a further decarburization reaction does not proceed, and a deep decarburized layer cannot be obtained. Therefore, in the manufacturing method of the steel sheet according to the present embodiment, it is important to move the gas in an annealing furnace so that the generated CO gas does not stay around the scale. Specifically, by installing a fan or the like in the annealing furnace and setting an air volume to 250 m³/Hr or more, a flow velocity in the annealing furnace can be secured and the decarburization reaction can proceed. When the air volume is less than 250 m³/Hr, the staying of CO gas around the scale cannot be sufficiently suppressed, and decarburization becomes insufficient. The air volume is set to an air volume around the hot-rolled coil, and a plurality of fans or the like may be installed depending on a size of the annealing furnace in order to obtain a predetermined air volume. A size of the hot-rolled coil is preferably set so that a sheet thickness is 9 mm or less, a sheet width is 2,100 mm or less, an outer diameter is 2,000 mm or less, and a weight of one coil is 30 tons or less.

Compared to a case where H₂O in the atmosphere is used as the decarburization source in the high dew point annealing, in a case where O in the scale is used as the decarburization source, O of the decarburization source is less likely to penetrate into the inside of the base steel sheet, and as a result, Internal oxidation is less likely to proceed.

That is, as described above, by performing box annealing on the hot-rolled coil in the mill scale state in the inert gas atmosphere by blowing air at an air volume of 250 m³/Hr or more, a desired depth of the decarburized layer, a desired depth of the internal oxidized layer, and a desired Fe content in the scale, which have been described regarding the steel sheet according to the present embodiment, can be obtained.

### (V) Heat Treatment Step

In the heat treatment step, a blank having a predetermined size is cut out from the hot-rolled coil after the annealing step, and the blank is subjected to a heat treatment to obtain a steel member.

The heat treatment is preferably performed under conditions in which the blank is heated to an Ac3 point to (Ac3 point + 300)°C at an average temperature rising rate of 1.0 to 1000 °C/sec and cooled to an Ms point (°C) or lower at an average cooling rate equal to or faster than an upper critical cooling rate.

When the temperature rising rate is slower than 1.0 °C/s, productivity of the heat treatment decreases, which is not preferable. On the other hand, when the temperature rising rate is faster than 1000 °C/s, a duplex grain structure is formed and a limit hydrogen content decreases, which is not preferable.

When a heat treatment temperature is lower than the Ac3 point (°C), ferrite remains after cooling and strength decreases, which is not preferable. On the other hand, when the heat treatment temperature is higher than the Ac3 point + 300°C, coarse grains are formed in the structure, and the limit hydrogen content decreases, which is not preferable.

The upper critical cooling rate is a minimum cooling rate at which austenite is supercooled to generate martensite without causing precipitation of ferrite and pearlite in the structure. When cooling is performed at an average cooling rate slower than the upper critical cooling rate, ferrite and pearlite are generated, resulting in insufficient strength.

During heating, holding may be performed for 1 to 300 seconds within a range of the heating temperature ± 10°C.

In addition, after cooling to a temperature equal to or lower than the Ms point, a tempering may be performed in a temperature range of about 100°C to 600°C in order to adjust the strength of the steel.

In this heat treatment, processing may be performed at the same time. That is, so-called hot stamping may be performed.

In addition, the steel member (including the coated steel member) according to the present embodiment may be a steel member having regions having different strengths obtained by performing hot forming or a heat treatment on a portion of the steel sheet as a material.

### (VI) Pickling, Cold Rolling, and Coating

In a case where the steel member is a coated steel member, the hot-rolled coil may be pickled and cold-rolled, and a coating containing Al may be further formed on the surface thereof between the annealing step and the heat treatment step.

In this case, pickling, cold rolling, and coating may be performed under known conditions. In a case where the scale is not sufficiently peeled off during pickling, shot blasting may be performed before pickling to mechanically promote scale peeling. For example, #60 may be used as a shot blasting medium size.

### [Examples]

First, steels having the chemical compositions shown in Table 1 were melted to obtain slabs for hot rolling.

### <Example 1>

The obtained slab was subjected to hot rolling to obtain a hot-rolled steel sheet having a thickness of 3.2 mm and a sheet width of 1,000 mm, this hot-rolled steel sheet was coiled at a temperature of 800°C or lower to obtain a hot-rolled coil having an outer diameter of 1,700 mm and a weight of 14 tons per coil.

The obtained hot-rolled coil was subjected to box annealing under the conditions (temperature, time, and air volume) shown in Tables 2-1 to 2-3. The annealing atmosphere was set to a nitrogen atmosphere.

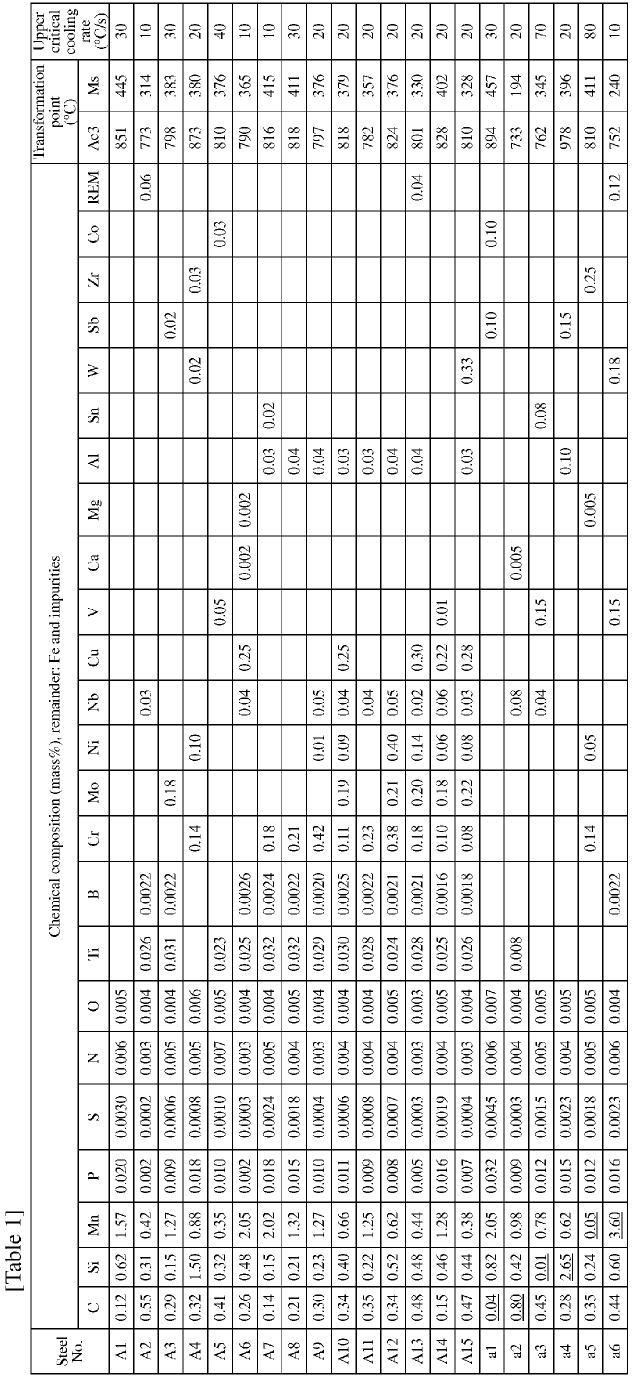

**[Table 2-1]**

| | Steel sheet No. | Steel No. | Annealing | | | Steel sheet | | | | | | | | |
|---|---|---|---|---|---|---|---|---|---|---|---|---|---|---|
| | | | Temperature | Time | Air volume | Thickness of decarburized layer | Thickness of internal oxidized layer | Thickness of decarburized layer / thickness of internal oxidized layer | Thickness of scale | Fe content in scale | Fe content in first region | Si content in first region | Fe content in second region | Mn content in second region |
| | | | (°C) | (hr) | (m³/Hr) | (µm) | (µm) | | (um) | (mass%) | (mass%) | (mass%) | (mass%) | (mass%) |
| Invention Example | B1 | A1 | 700 | 12 | 320 | 162 | 11 | 15 | 22 | 88 | 90 | 0.9 | 68 | 3.9 |
| | B2 | A2 | 700 | 12 | 320 | 196 | 9 | 23 | 32 | 88 | 90 | 0.5 | 70 | 1.1 |
| | B3 | A3 | 700 | 12 | 320 | 172 | 12 | 14 | 18 | 90 | 92 | 0.2 | 73 | 3.2 |
| | B4 | A4 | 700 | 12 | 320 | 183 | 11 | 17 | 17 | 91 | 92 | 2.3 | 74 | 2.2 |
| | B5 | A5 | 700 | 12 | 320 | 168 | 8 | 20 | 25 | 90 | 90 | 0.5 | 73 | 0.9 |
| | B6 | A6 | 700 | 12 | 320 | 180 | 7 | 25 | 16 | 91 | 92 | 0.7 | 73 | 5.1 |
| | B7 | A7 | 670 | 12 | 350 | 130 | 8 | 17 | 24 | 82 | 90 | 0.2 | 71 | 5.1 |
| | B8 | A7 | 800 | 12 | 350 | 304 | 14 | 21 | 24 | 87 | 94 | 0.2 | 70 | 5.1 |
| | B9 | A7 | 700 | 8 | 350 | 180 | 10 | 19 | 24 | 82 | 91 | 0.2 | 69 | 5.1 |
| | B10 | A7 | 700 | 14 | 350 | 196 | 10 | 20 | 24 | 85 | 94 | 0.2 | 70 | 5.1 |
| | B11 | A7 | 700 | 12 | 280 | 170 | 9 | 19 | 24 | 83 | 90 | 0.2 | 70 | 5.1 |
| | B12 | A7 | 700 | 12 | 320 | 190 | 10 | 20 | 24 | 83 | 93 | 0.2 | 69 | 5.1 |
| | B13 | A8 | 670 | 12 | 350 | 132 | 9 | 14 | 21 | 83 | 91 | 0.3 | 72 | 3.3 |
| | B14 | A8 | 800 | 12 | 350 | 296 | 18 | 16 | 21 | 89 | 94 | 0.3 | 70 | 3.3 |
| | B15 | A8 | 700 | 8 | 350 | 178 | 12 | 15 | 21 | 83 | 90 | 0.3 | 69 | 3.3 |
| | B16 | A8 | 700 | 14 | 350 | 200 | 12 | 16 | 21 | 86 | 94 | 0.3 | 71 | 3.3 |
| | B17 | A8 | 700 | 12 | 280 | 170 | 11 | 15 | 21 | 84 | 91 | 0.3 | 70 | 3.3 |
| | B18 | A8 | 700 | 12 | 320 | 182 | 11 | 17 | 21 | 85 | 94 | 0.3 | 70 | 3.3 |
| | B19 | A9 | 670 | 12 | 350 | 124 | 11 | 11 | 26 | 82 | 93 | 0.3 | 72 | 3.2 |
| | B20 | A9 | 800 | 12 | 350 | 300 | 24 | 13 | 26 | 95 | 96 | 0.3 | 72 | 3.2 |
| | B21 | A9 | 700 | 8 | 350 | 162 | 13 | 13 | 26 | 90 | 92 | 0.3 | 71 | 3.2 |
| | B22 | A9 | 700 | 14 | 350 | 164 | 13 | 13 | 26 | 91 | 93 | 0.3 | 71 | 3.2 |
| | B23 | A9 | 700 | 12 | 280 | 156 | 11 | 15 | 26 | 88 | 92 | 0.3 | 71 | 3.2 |
| | B24 | A9 | 700 | 12 | 320 | 162 | 13 | 13 | 26 | 90 | 95 | 0.3 | 72 | 3.2 |
| | B25 | A10 | 670 | 12 | 350 | 140 | 3 | 47 | 13 | 88 | 93 | 0.6 | 73 | 1.7 |
| | B26 | A10 | 800 | 12 | 350 | 394 | 7 | 55 | 13 | 96 | 95 | 0.6 | 74 | 1.7 |
| | B27 | A10 | 700 | 8 | 350 | 264 | 4 | 66 | 13 | 93 | 92 | 0.6 | 74 | 1.7 |
| | B28 | A10 | 700 | 14 | 350 | 280 | 4 | 68 | 13 | 94 | 94 | 0.6 | 74 | 1.7 |
| | B29 | A10 | 700 | 12 | 280 | 240 | 4 | 69 | 13 | 92 | 90 | 0.6 | 75 | 1.7 |
| | B30 | A10 | 700 | 12 | 320 | 274 | 4 | 69 | 13 | 94 | 94 | 0.6 | 74 | 1.7 |

**[Table 2-2]**

| | Steel sheet No. | Steel No. | Annealing | | | Steel sheet | | | | | | | | |
|---|---|---|---|---|---|---|---|---|---|---|---|---|---|---|
| | | | Temperature | Time | Air volume | Thickness of decarburized layer | Thickness of internal oxidized layer | Thickness of decarburized layer / thickness of internal oxidized layer | Thickness of scale | Fe content in scale | Fe content in first region | Si content in first region | Fe content in second region | Mn content in second region |
| | | | (°C) | (hr) | (m³/Hr) | (µm) | (µm) | | (um) | (mass%) | (mass%) | (mass%) | (mass%) | (mass%) |
| Invention Example | B31 | A11 | 670 | 12 | 350 | 128 | 12 | 11 | 20 | 83 | 92 | 0.3 | 71 | 3.1 |
| | B32 | A11 | 800 | 12 | 350 | 296 | 24 | 12 | 20 | 94 | 94 | 0.3 | 72 | 3.1 |
| | B33 | A11 | 700 | 8 | 350 | 164 | 13 | 13 | 20 | 91 | 93 | 0.3 | 72 | 3.1 |
| | B34 | A11 | 700 | 14 | 350 | 166 | 13 | 13 | 20 | 91 | 95 | 0.3 | 72 | 3.1 |
| | B35 | A11 | 700 | 12 | 280 | 154 | 11 | 14 | 20 | 87 | 92 | 0.3 | 72 | 3.1 |
| | B36 | A11 | 700 | 12 | 320 | 166 | 13 | 13 | 20 | 90 | 94 | 0.3 | 72 | 3.1 |
| | B37 | A12 | 670 | 12 | 350 | 136 | 7 | 20 | 18 | 84 | 90 | 0.8 | 70 | 1.6 |
| | B38 | A12 | 800 | 12 | 350 | 332 | 9 | 37 | 18 | 95 | 96 | 0.8 | 74 | 1.6 |
| | B39 | A12 | 700 | 8 | 350 | 240 | 8 | 31 | 18 | 90 | 91 | 0.8 | 71 | 1.6 |
| | B40 | A12 | 700 | 14 | 350 | 262 | 8 | 33 | 18 | 91 | 93 | 0.8 | 71 | 1.6 |
| | B41 | A12 | 700 | 12 | 280 | 215 | 8 | 28 | 18 | 88 | 91 | 0.8 | 70 | 1.6 |
| | B42 | A12 | 700 | 12 | 320 | 166 | 7 | 22 | 18 | 91 | 92 | 0.8 | 71 | 1.6 |
| | B43 | A13 | 670 | 12 | 350 | 150 | 3 | 48 | 15 | 89 | 90 | 0.7 | 73 | 1.1 |
| | B44 | A13 | 800 | 12 | 350 | 398 | 7 | 55 | 15 | 96 | 96 | 0.7 | 75 | 1.1 |
| | B45 | A13 | 700 | 8 | 350 | 272 | 4 | 68 | 15 | 93 | 94 | 0.7 | 74 | 1.1 |
| | B46 | A13 | 700 | 14 | 350 | 286 | 4 | 72 | 15 | 94 | 94 | 0.7 | 74 | 1.1 |
| | B47 | A13 | 700 | 12 | 280 | 248 | 3 | 73 | 15 | 92 | 93 | 0.7 | 74 | 1.1 |
| | B48 | A13 | 700 | 12 | 320 | 280 | 4 | 68 | 15 | 94 | 94 | 0.7 | 75 | 1.1 |
| | B49 | A14 | 670 | 12 | 350 | 138 | 2 | 69 | 20 | 84 | 84 | 0.4 | 71 | 3.0 |
| | B50 | A14 | 800 | 12 | 350 | 311 | 4 | 78 | 20 | 87 | 88 | 0.4 | 71 | 3.0 |
| | B51 | A14 | 700 | 8 | 350 | 187 | 2 | 94 | 20 | 84 | 85 | 0.4 | 69 | 3.0 |
| | B52 | A14 | 700 | 14 | 350 | 203 | 2 | 102 | 20 | 85 | 85 | 0.4 | 70 | 3.0 |
| | B53 | A14 | 700 | 12 | 280 | 175 | 2 | 88 | 20 | 83 | 84 | 0.4 | 70 | 3.0 |
| | B54 | A14 | 700 | 12 | 320 | 199 | 2 | 100 | 20 | 84 | 84 | 0.4 | 70 | 3.0 |
| | B55 | A15 | 670 | 12 | 350 | 161 | 2 | 81 | 12 | 90 | 91 | 0.7 | 74 | 1.0 |
| | B56 | A15 | 800 | 12 | 350 | 401 | 4 | 100 | 12 | 96 | 96 | 0.7 | 75 | 1.0 |
| | B57 | A15 | 700 | 8 | 350 | 288 | 2 | 144 | 12 | 94 | 95 | 0.7 | 74 | 1.0 |
| | B58 | A15 | 700 | 14 | 350 | 292 | 2 | 146 | 12 | 94 | 94 | 0.7 | 75 | 1.0 |
| | B59 | A15 | 700 | 12 | 280 | 255 | 2 | 128 | 12 | 93 | 94 | 0.7 | 74 | 1.0 |
| | B60 | A15 | 700 | 12 | 320 | 280 | 2 | 140 | 11 | 94 | 95 | 0.7 | 75 | 1.0 |

**[Table 2-3]**

| | Steel -heel No. | Steel No. | Annealing | | | Steel sheet | | | | | | | | |
|---|---|---|---|---|---|---|---|---|---|---|---|---|---|---|
| | | | Temperature | Time | Air volume | Thickness of decarburized layer | Thickness of internal oxidized layer | Thickness or decarburized layer / thickness of internal oxidized layer | Thickness of scale | Fc content in scale | Fe content in first region | Si content in first region | Fe content in second region | Mn content in second region |
| | | | (°C) | (hr) | (m³/Hr) | (µm) | (µm) | | (µm) | (mass%) | (mass%) | (mass%) | (mass%) | (mass%) |
| | b1 | a1 | 700 | 12 | 320 | 165 | 10 | 17 | 28 | 89 | 90 | 1.2 | 71 | 5.1 |
| | b2 | a2 | 700 | 12 | 320 | 170 | 12 | 14 | 42 | 89 | 90 | 0.6 | 70 | 2.5 |
| | b3 | a3 | 700 | 12 | 320 | 166 | 9 | 18 | 27 | 90 | 90 | 0.0 | 71 | 2.0 |
| | b4 | a4 | 700 | 12 | 320 | 168 | 14 | 12 | 35 | 90 | 91 | 4.0 | 72 | 1.6 |
| | b5 | a5 | 700 | 12 | 320 | 175 | 9 | 20 | 25 | 89 | 90 | 0.4 | 72 | 0.1 |
| | b6 | a6 | 700 | 12 | 320 | 170 | 14 | 12 | 18 | 90 | 91 | 0.9 | 71 | 9.0 |
| | b7 | A1 | 400 | 10 | 300 | 32 | 10 | 3 | 22 | 62 | - | - | 51 | 1.6 |
| | b8 | A2 | 660 | 1 | 300 | 36 | 10 | 4 | 32 | 64 | - | - | 53 | 0.4 |
| | b9 | A3 | 660 | 10 | 150 | 34 | 8 | 4 | 18 | 62 | - | - | 50 | 1.2 |
| Comparative Example | b10 | A4 | 660 | 10 | 50 | 31 | 8 | 4 | 17 | 60 | - | - | 48 | 0.9 |
| | b11 | A5 | 400 | 10 | 300 | 33 | 9 | 4 | 25 | 63 | - | - | 51 | 0.4 |
| | b12 | A6 | 660 | 1 | 300 | 36 | 4 | 10 | 16 | 65 | - | - | 52 | 2.0 |
| | b13 | A7 | 660 | 10 | 150 | 34 | 8 | 4 | 24 | 62 | - | - | 49 | 2.0 |
| | bl4 | A8 | 660 | 10 | 50 | 30 | 9 | 3 | 21 | 61 | - | - | 48 | 1.2 |
| | b15 | A9 | 400 | 10 | 300 | 32 | 9 | 3 | 26 | 62 | - | - | 50 | 1.3 |
| | bl6 | A10 | 660 | 1 | 300 | 37 | 3 | 13 | 13 | 64 | - | - | 52 | 0.8 |
| | b17 | A11 | 660 | 10 | 150 | 33 | 10 | 3 | 20 | 62 | - | - | 51 | 1.4 |
| | b18 | A12 | 660 | 10 | 50 | 31 | 10 | 3 | 18 | 61 | - | - | 50 | 0.6 |
| | b19 | A13 | 400 | 10 | 300 | 32 | 3 | 12 | 15 | 61 | - | - | 49 | 0.5 |
| | b20 | A10 | 1100 | 10 | 300 | 12 | 58 | 0 | 72 | 97 | 97 | 0.7 | 78 | 1.7 |
| | b21 | A11 | 1100 | 10 | 300 | 10 | 67 | 0 | 83 | 96 | 97 | 0.4 | 79 | 32 |
| | b22 | A12 | 1100 | 10 | 300 | 10 | 68 | 0 | 87 | 97 | 98 | 0.8 | 79 | 1.6 |
| | b23 | A13 | 1100 | 10 | 300 | 9 | 54 | 0 | 72 | 97 | 97 | 0.8 | 80 | 1.2 |

A steel sheet (blank) having a predetermined size was cut out from the obtained hot-rolled coil after the annealing, and glow discharge emission spectroscopy (GDS), SEM observation, EPMA analysis, and optical microscope observation were performed in the manner described above, and the depth of the decarburized layer, the depth of the internal oxidized layer, the thickness of the scale, and the Fe content in the scale were evaluated. In addition, the Fe content and Si content in the first region included in the scale, and the Fe content and Mn content in the second region were evaluated in the manner described above. The evaluation results are shown in Tables 2-1 to 2-3.

The chemical composition of the steel sheet at the 1/4 thickness position from the surface in the sheet thickness direction of the steel sheet was similar to the chemical composition of the slab.

As shown in Tables 2-1 to 2-3, in Invention Examples B1 to B60 satisfying the ranges of the present invention, steel sheets having a predetermined chemical composition and structure were obtained. On the other hand, Comparative Examples b1 to b23 not satisfying the ranges of the present invention obtained results not satisfying at least one of the target structures. For example, in b7 to b19, the first region was not observed.

### <Example 2>

The steel sheets shown in Tables 2-1 to 2-3 were subjected to a heat treatment under the conditions shown in Tables 3-1 to 3-3 to obtain steel members.

The obtained steel member was cut out, and glow discharge emission spectroscopy (GDS), SEM observation, and optical microscope observation were performed in the manner described above to obtain the depth of the decarburized layer, the depth of the internal oxidized layer, and the Fe content in the scale.

The results are shown in Tables 3-1 to 3-3.

In addition, a tensile test, a bending test, and a spot welding test were conducted on the obtained steel members by the following methods, and tensile strength, bendability, and weldability (appropriate welding current range) were evaluated.

### <Tensile Strength (Tensile Strength)>

The tensile test was conducted in accordance with the regulations of ASTM Standard E8.

A soaked portion of the steel member was ground to a thickness of 1.2 mm, and thereafter a half-sized sheet-shaped test piece of ASTM standard E8 (parallel portion length: 32 mm, parallel portion sheet width: 6.25 mm) was collected so that a test direction was parallel to the rolling direction. Then, a room temperature tensile test was conducted at a strain rate of 3 mm/min to measure the tensile strength (maximum strength).

In this example, a case of having a tensile strength of more than 1,000 MPa was evaluated as high strength.

### <Bendability>

The bending test was conducted in accordance with the regulations of VDA238-100. A bending test piece of 60 mm parallel to the rolling direction and 30 mm perpendicular to the rolling direction was collected from the soaked portion of the steel member. A bending punch was aligned so as to be perpendicular to the rolling direction, and a bending angle at the maximum load was measured. Since the bending angle correlates with the strength, in this example, a case of having a bending angle of 55 degrees when the tensile strength was less than 2,100 MPa and a bending angle of more than 45 degrees when the tensile strength was 2,100 MPa or more was evaluated as having better bendability than in the related art.

### <Appropriate Current Range>

Spot welding was performed in accordance with JIS Z 3001-6:2013. A 60 Hz single-phase AC power source was used, an electrode having a tip diameter of 8 mm was used, and a welding time was set to 10 cycles. A spot welding test piece of 40 mm in the rolling direction and 30 mm perpendicular to the rolling direction was collected from the soaked portion of the steel member. These were joined together, and a range from a welding current at which a nugget diameter was 3√t to an upper limit current at which splash did not occur was obtained and set as an appropriate current range.

A peel diameter obtained from a peel test was used as the nugget diameter, welding test pieces were collected five times at each current, and an average value of the peel diameters was defined as the nugget diameter.

When the appropriate current range was 2.5 kA or more, it was determined that the weldability was excellent.

**[Table 3-1]**

| | Member No. | Steel sheet No. | Steel No. | Heat treatment | | | Steel member | | | | | |
|---|---|---|---|---|---|---|---|---|---|---|---|---|
| | | | | Temperature rising rate | Heating temperature | Cooling rate | Thickness of decarburized layer | Thickness of internal oxidized layer | Fc content in scale | Bending angle | Appropriate welding current range | Tensile strength |
| | | | | (°C/s) | (°C) | (°C/s) | (µm) | (µm) | (%) | (°) | (kA) | (MPa) |
| Invention Example | C1 | B1 | A1 | 5 | 920 | 50 | 119 | 14 | 82 | 88 | 4.2 | 1243 |
| | C2 | B2 | A2 | 5 | 920 | 50 | 152 | 11 | 81 | 49 | 4.0 | 2738 |
| | C3 | B3 | A3 | 5 | 920 | 50 | 127 | 15 | 81 | 65 | 4.0 | 1923 |
| | C4 | B4 | A4 | 5 | 920 | 50 | 135 | 14 | 84 | 59 | 4.4 | 2044 |
| | C5 | B5 | A5 | 5 | 920 | 50 | 121 | 11 | 81 | 52 | 4.0 | 2349 |
| | C6 | B6 | A6 | 5 | 920 | 50 | 133 | 9 | 85 | 67 | 4.4 | 1884 |
| | C7 | B7 | A7 | 6 | 920 | 50 | 88 | 11 | 77 | 80 | 3.4 | 1364 |
| | C8 | B8 | A7 | 6 | 920 | 50 | 250 | 17 | 80 | 118 | 4.0 | 1270 |
| | C9 | B9 | A7 | 6 | 920 | 50 | 134 | 12 | 74 | 98 | 3.2 | 1335 |
| | C10 | B10 | A7 | 6 | 920 | 50 | 148 | 13 | 79 | 105 | 3.8 | 1320 |
| | C11 | B11 | A7 | 6 | 920 | 50 | 122 | 12 | 76 | 92 | 3.6 | 1310 |
| | C12 | B12 | A7 | 6 | 920 | 50 | 143 | 12 | 75 | 105 | 3.8 | 1321 |
| | C13 | B13 | A8 | 6 | 920 | 50 | 87 | 12 | 75 | 70 | 3.4 | 1594 |
| | C14 | B14 | A8 | 6 | 920 | 50 | 241 | 21 | 82 | 96 | 4.2 | 1522 |
| | C15 | B15 | A8 | 6 | 920 | 50 | 131 | 14 | 76 | 84 | 3.4 | 1550 |
| | C16 | B16 | A8 | 6 | 920 | 50 | 154 | 15 | 80 | 87 | 4.0 | 1538 |
| | C17 | B17 | A8 | 6 | 920 | 50 | 125 | 14 | 77 | 83 | 3.4 | 1548 |
| | C18 | B18 | A8 | 6 | 920 | 50 | 136 | 14 | 77 | 84 | 3.6 | 1548 |
| | C19 | B19 | A9 | 6 | 920 | 50 | 80 | 14 | 77 | 56 | 3.4 | 1971 |
| | C20 | B20 | A9 | 6 | 920 | 50 | 244 | 27 | 87 | 75 | 4.8 | 1895 |
| | C21 | B21 | A9 | 6 | 920 | 50 | 114 | 16 | 82 | 66 | 4.4 | 1948 |
| | C22 | B22 | A9 | 6 | 920 | 50 | 115 | 17 | 87 | 65 | 4.6 | 1950 |
| | C23 | B23 | A9 | 6 | 920 | 50 | 109 | 14 | 83 | 61 | 4.2 | 1952 |
| | C24 | B24 | A9 | 6 | 920 | 50 | 115 | 16 | 84 | 63 | 4.4 | 1945 |
| | C25 | B25 | A10 | 10 | 920 | 60 | 97 | 5 | 83 | 61 | 4.0 | 2084 |
| | C26 | B26 | A10 | 10 | 920 | 60 | 339 | 8 | 87 | 87 | 5.4 | 2004 |
| | C27 | B27 | A10 | 10 | 920 | 60 | 217 | 5 | 87 | 76 | 4.6 | 2054 |
| | C28 | B28 | A10 | 10 | 920 | 60 | 230 | 5 | 86 | 78 | 4.8 | 2048 |
| | C29 | B29 | A10 | 10 | 920 | 60 | 189 | 5 | 87 | 70 | 4.4 | 2051 |
| | C30 | B30 | A10 | 10 | 920 | 60 | 225 | 5 | 88 | 78 | 4.6 | 2075 |

**[Table 3-2]**

| | Member No. | Steel sheet No. | Steel No. | Heat treatment | | | Steel member | | | | | |
|---|---|---|---|---|---|---|---|---|---|---|---|---|
| | | | | Temperature rising rate | Heating temperature | Cooling rate | Thickness of decarburized layer | Thickness of internal oxidized layer | Fe content in scale | Bending angle | Appropriate welding current range | Tensile strength |
| | | | | (°C/s) | (°C) | (°C/s) | (µm) | (µm) | (%) | (°) | (kA) | (MPa) |
| Invention Example | C31 | B31 | A11 | 10 | 920 | 60 | 88 | 14 | 78 | 53 | 3.6 | 2184 |
| | C32 | B32 | A11 | 10 | 920 | 60 | 240 | 27 | 87 | 66 | 4.6 | 2102 |
| | C33 | B33 | A11 | 10 | 920 | 60 | 121 | 16 | 83 | 59 | 4.2 | 2152 |
| | C34 | B34 | A11 | 10 | 920 | 60 | 122 | 16 | 85 | 58 | 4.4 | 2154 |
| | C35 | B35 | A11 | 10 | 920 | 60 | 107 | 14 | 80 | 56 | 4.0 | 2158 |
| | C36 | B36 | A11 | 10 | 920 | 60 | 122 | 16 | 81 | 60 | 4.0 | 2152 |
| | C37 | B37 | A12 | 20 | 920 | 60 | 93 | 10 | 79 | 58 | 3.8 | 2084 |
| | C38 | B38 | A12 | 20 | 920 | 60 | 273 | 12 | 89 | 81 | 4.8 | 2008 |
| | C39 | B39 | A12 | 20 | 920 | 60 | 192 | 11 | 83 | 74 | 4.2 | 2040 |
| | C40 | B40 | A12 | 20 | 920 | 60 | 218 | 11 | 83 | 76 | 4.2 | 2038 |
| | C41 | B41 | A12 | 20 | 920 | 60 | 169 | 10 | 81 | 67 | 4.0 | 2045 |
| | C42 | B42 | A12 | 20 | 920 | 60 | 121 | 10 | 82 | 64 | 4.2 | 2061 |
| | C43 | B43 | A13 | 20 | 920 | 60 | 108 | 4 | 81 | 49 | 4.0 | 2662 |
| | C44 | B44 | A13 | 20 | 920 | 60 | 343 | 8 | 88 | 60 | 4.4 | 2558 |
| | C45 | B45 | A13 | 20 | 920 | 60 | 227 | 5 | 88 | 55 | 4.6 | 2628 |
| | C46 | B46 | A13 | 20 | 920 | 60 | 239 | 5 | 88 | 58 | 4.6 | 2629 |
| | C47 | B47 | A13 | 20 | 920 | 60 | 202 | 4 | 85 | 54 | 4.2 | 2640 |
| | C48 | B48 | A13 | 20 | 920 | 60 | 237 | 5 | 88 | 58 | 4.6 | 2630 |
| | C49 | B49 | A14 | 6 | 920 | 50 | 93 | 3 | 79 | 91 | 3.6 | 1367 |
| | C50 | B50 | A14 | 6 | 920 | 50 | 255 | 6 | 81 | 122 | 4.0 | 1271 |
| | C51 | B51 | A14 | 6 | 920 | 50 | 136 | 4 | 76 | 108 | 3.2 | 1341 |
| | C52 | B52 | A14 | 6 | 920 | 50 | 151 | 4 | 81 | 112 | 4.0 | 1328 |
| | C53 | B53 | A14 | 6 | 920 | 50 | 126 | 4 | 77 | 101 | 3.8 | 1311 |
| | C54 | B54 | A14 | 6 | 920 | 50 | 145 | 4 | 77 | 112 | 3.8 | 1328 |
| | C55 | B55 | A15 | 6 | 920 | 50 | 111 | 3 | 82 | 57 | 4.2 | 2668 |
| | C56 | B56 | A15 | 6 | 920 | 50 | 351 | 6 | 89 | 66 | 4.4 | 2567 |
| | C57 | B57 | A15 | 6 | 920 | 50 | 233 | 4 | 89 | 59 | 4.8 | 2633 |
| | C58 | B58 | A15 | 6 | 920 | 50 | 244 | 4 | 88 | 63 | 4.8 | 2630 |
| | C59 | B59 | A15 | 6 | 920 | 50 | 211 | 3 | 86 | 59 | 4.2 | 2649 |
| | C60 | B60 | A15 | 6 | 920 | 50 | 240 | 4 | 88 | 64 | 4.6 | 2640 |

**[Table 3-3]**

| | Member No. | Steel sheet No. | Steel No. | Heat treatment | | | Steel member | | | | | |
|---|---|---|---|---|---|---|---|---|---|---|---|---|
| | | | | Temperature rising rate | Heating temperature | Cooling rate | Thickness of decarburized layer | Thickness of internal oxidized layer | Fe content in scale | Bending angle | Appropriate welding current range | Tensile strength |
| | | | | (°C/s) | (°C) | (°C/s) | (µm) | (µm) | (%) | (°) | (kA) | (MPa) |
| Comparative Example | c1 | b1 | a1 | 100 | 900 | 40 | 121 | 12 | 85 | 110 | 4.2 | 928 |
| | c2 | b2 | a2 | 100 | 900 | 40 | 123 | 14 | 83 | 38 | 4.2 | 2935 |
| | c3 | b3 | a3 | 100 | 900 | 40 | 120 | 12 | 82 | 112 | 4.0 | 873 |
| | c4 | b4 | a4 | 100 | 900 | 40 | 123 | 17 | 84 | 102 | 4.2 | 955 |
| | c5 | b5 | a5 | 100 | 900 | 40 | 131 | 11 | 82 | 113 | 4.0 | 882 |
| | c6 | b6 | a6 | 100 | 900 | 40 | 126 | 16 | 82 | 40 | 4.0 | 2674 |
| | c7 | b7 | A1 | 10 | 900 | 40 | 14 | 13 | 57 | 52 | 1.4 | 1243 |
| | c8 | b8 | A2 | 10 | 900 | 40 | 17 | 13 | 56 | 25 | 1.4 | 2738 |
| | c9 | b9 | A3 | 10 | 900 | 40 | 16 | 10 | 55 | 45 | 1.2 | 1923 |
| | c10 | b10 | A4 | 10 | 900 | 40 | 14 | 12 | 54 | 41 | 1.2 | 2044 |
| | c11 | b11 | A5 | 10 | 900 | 40 | 14 | 12 | 58 | 32 | 1.4 | 2349 |
| | c12 | b12 | A6 | 10 | 900 | 40 | 18 | 6 | 59 | 46 | 1.6 | 1884 |
| | c13 | b13 | A7 | 10 | 900 | 40 | 15 | 11 | 54 | 51 | 1.4 | 1364 |
| | c14 | b14 | A8 | 10 | 900 | 40 | 13 | 12 | 55 | 48 | 1.2 | 1594 |
| | c15 | b15 | A9 | 10 | 900 | 40 | 14 | 12 | 57 | 45 | 1.4 | 1971 |
| | c16 | b16 | A10 | 10 | 900 | 40 | 18 | 6 | 56 | 35 | 1.4 | 2084 |
| | c17 | b17 | A11 | 10 | 900 | 40 | 15 | 13 | 56 | 33 | 1.2 | 2184 |
| | c18 | b18 | A12 | 10 | 900 | 40 | 14 | 13 | 54 | 35 | 1.2 | 2084 |
| | c19 | b19 | A13 | 10 | 900 | 40 | 13 | 5 | 55 | 27 | 1.4 | 2662 |

As shown in Tables 3-1 to 3-3, Invention Examples C1 to C60 satisfying the ranges of the present invention obtained good results in terms of both the structure and properties, but Comparative Examples c1 to c19 not satisfying the ranges of the present invention obtained results in which at least one of the structure and properties did not satisfy the target.

### <Example 3>

The steel sheets shown in Tables 2-1 to 2-3 were subjected to pickling, cold rolling, and hot-dip Al plating to obtain coated steel sheets having a thickness of 2.0 mm. The coated steel sheet was subjected to a heat treatment under the conditions shown in Tables 4-1 to 4-3 to obtain a coated steel member.

The obtained steel member was cut out, and glow discharge emission spectroscopy (GDS), SEM observation, and optical microscope observation were performed in the manner described above to obtain the depth of the decarburized layer, the depth of the internal oxidized layer, and the Fe content in the scale.

In addition, a tensile test, a bending test, and a spot welding test were conducted on the obtained steel members in the same manner as in Example 2, and tensile strength, bendability, and weldability were evaluated.

The results are shown in Tables 4-1 to 4-3.

**[Table 4-1]**

| | Member No. | Steel sheet No. | Steel No. | Heat treatment | | | Coated steel member | | | | |
|---|---|---|---|---|---|---|---|---|---|---|---|
| | | | | Temperature rising rate | Heating temperature | Cooling rate | Thickness of decarburized layer | Thickness of internal oxidized layer | Bending angle | Appropriate welding current range | Tensile strength |
| | | | | (°C/s) | (°C) | (°C/s) | (µm) | (µm) | (°) | (kA) | (MPa) |
| Invention Example | D1 | B1 | A1 | 5 | 920 | 50 | 51 | 7 | 90 | 8.0 | 1241 |
| | D2 | B2 | A2 | 5 | 920 | 50 | 61 | 6 | 52 | 7.6 | 2732 |
| | D3 | B3 | A3 | 5 | 920 | 50 | 56 | 8 | 69 | 7.8 | 1919 |
| | D4 | B4 | A4 | 5 | 920 | 50 | 52 | 7 | 57 | 8.2 | 2039 |
| | D5 | B5 | A5 | 5 | 920 | 50 | 52 | 5 | 54 | 8.0 | 2341 |
| | D6 | B6 | A6 | 5 | 920 | 50 | 54 | 5 | 70 | 8.2 | 1879 |
| | D7 | B7 | A7 | 6 | 920 | 50 | 46 | 6 | 80 | 6.8 | 1358 |
| | D8 | B8 | A7 | 6 | 920 | 50 | 91 | 8 | 120 | 7.4 | 1263 |
| | D9 | B9 | A7 | 6 | 920 | 50 | 58 | 6 | 101 | 6.6 | 1327 |
| | D10 | B10 | A7 | 6 | 920 | 50 | 60 | 7 | 109 | 7.2 | 1311 |
| | D11 | B11 | A7 | 6 | 920 | 50 | 49 | 6 | 95 | 7.4 | 1307 |
| | D12 | B12 | A7 | 6 | 920 | 50 | 61 | 6 | 107 | 7.6 | 1316 |
| | D13 | B13 | A8 | 6 | 920 | 50 | 44 | 6 | 73 | 7.2 | 1588 |
| | D14 | B14 | A8 | 6 | 920 | 50 | 98 | 10 | 96 | 7.8 | 1515 |
| | D15 | B15 | A8 | 6 | 920 | 50 | 58 | 7 | as | 7.0 | 1539 |
| | D16 | B16 | A8 | 6 | 920 | 50 | 66 | 8 | 95 | 7.2 | 1533 |
| | D17 | B17 | A8 | 6 | 920 | 50 | 53 | 7 | 91 | 6.6 | 1542 |
| | D18 | B18 | A8 | 6 | 920 | 50 | 62 | 7 | 91 | 6.8 | 1541 |
| | D19 | B19 | A9 | 6 | 920 | 50 | 42 | 8 | 56 | 7.0 | 1959 |
| | D20 | B20 | A9 | 6 | 920 | 50 | 91 | 12 | 84 | 8.6 | 1890 |
| | D21 | B21 | A9 | 6 | 920 | 50 | 44 | 8 | 69 | 4.8 | 1944 |
| | D22 | B22 | A9 | 6 | 920 | 50 | 49 | 9 | 69 | 8.2 | 1945 |
| | D23 | B23 | A9 | 6 | 920 | 50 | 46 | 7 | 65 | 7.8 | 1946 |
| | D24 | B24 | A9 | 6 | 920 | 50 | 47 | 8 | 72 | 8.0 | 1938 |
| | D25 | B25 | A10 | 10 | 920 | 60 | 47 | 3 | 69 | 7.6 | 2072 |
| | D26 | B26 | A10 | 10 | 920 | 60 | 125 | 4 | 90 | 9.0 | 1995 |
| | D27 | B27 | A10 | 10 | 920 | 60 | 84 | 3 | 79 | 8.2 | 2054 |
| | D28 | B28 | A10 | 10 | 920 | 60 | 84 | 2 | 82 | 8.6 | 2048 |
| | D29 | B29 | A10 | 10 | 920 | 60 | 66 | 3 | 73 | 7.8 | 2051 |
| | D30 | B30 | A10 | 10 | 920 | 60 | 93 | 3 | 82 | 8.0 | 2066 |

**[Table 4-2]**

| | Member No. | Steel sheet No. | Steel No. | Heat treatment | | | Coated steel member | | | | |
|---|---|---|---|---|---|---|---|---|---|---|---|
| | | | | Temperature rising rate | Heating temperature | Cooling rate | Thickness of decarburized layer | Thickness of internal oxidized layer | Bending angle | Appropriate welding current range | Tensile strength |
| | | | | (°C/s) | (°C) | (°C/s) | (µm) | (µm) | (°) | (kA) | (MPa) |
| Invention Example | D31 | R31 | A11 | 10 | 920 | 60 | 47 | 7 | 59 | 7.0 | 2180 |
| | D32 | B32 | A11 | 10 | 920 | 60 | 83 | 12 | 69 | 8.0 | 2097 |
| | D33 | B33 | A11 | 10 | 920 | 60 | 55 | 8 | 62 | 7.6 | 2146 |
| | D34 | B34 | A11 | 10 | 920 | 60 | 53 | 8 | 63 | 7.4 | 2147 |
| | D35 | B35 | A11 | 10 | 920 | 60 | 44 | a | 60 | 7.0 | 2150 |
| | D36 | B36 | A11 | 10 | 920 | 60 | 53 | 8 | 65 | 8.0 | 2143 |
| | D37 | B37 | A12 | 20 | 920 | 60 | 44 | 5 | 64 | 6.8 | 2078 |
| | D38 | B38 | A12 | 20 | 920 | 60 | 108 | 6 | 88 | 8.8 | 2003 |
| | D39 | B39 | A12 | 20 | 920 | 60 | 79 | 6 | 79 | 7.2 | 2034 |
| | D40 | B40 | A12 | 20 | 920 | 60 | 93 | 6 | 80 | 8.2 | 2031 |
| | D41 | B41 | A12 | 20 | 920 | 60 | 70 | 6 | 69 | 7.4 | 2043 |
| | D42 | B42 | A12 | 20 | 920 | 60 | 50 | 6 | 67 | 7.6 | 2055 |
| | D43 | B43 | A13 | 20 | 920 | 60 | 46 | 2 | 52 | 7.8 | 2653 |
| | D44 | B44 | A13 | 20 | 920 | 60 | 126 | 4 | 63 | 8.2 | 2558 |
| | D45 | B45 | A13 | 20 | 920 | 60 | 99 | 2 | 57 | 8.4 | 2628 |
| | D46 | B46 | A13 | 20 | 920 | 60 | 99 | 2 | 58 | 8.4 | 2624 |
| | D47 | B47 | A13 | 20 | 920 | 60 | 81 | 2 | 54 | 8.0 | 2634 |
| | D48 | B48 | A13 | 20 | 920 | 60 | 94 | 2 | 60 | 8.4 | 2623 |
| | D49 | B49 | A14 | 10 | 920 | 60 | 49 | 2 | 87 | 7.4 | 1361 |
| | D50 | B50 | A14 | 10 | 920 | 60 | 97 | 3 | 122 | 6.6 | 1302 |
| | D51 | B51 | A14 | 10 | 920 | 60 | 65 | 2 | 110 | 7.4 | 1323 |
| | D52 | B52 | A14 | 10 | 920 | 60 | 66 | 2 | 117 | 7.4 | 1219 |
| | D53 | B53 | A14 | 10 | 920 | 60 | 53 | 2 | 102 | 7.6 | 1310 |
| | D54 | B54 | A14 | 10 | 920 | 60 | 63 | 1 | 113 | 7.8 | 1321 |
| | D55 | B55 | A15 | 10 | 920 | 60 | 53 | 2 | 56 | 7.8 | 2659 |
| | D56 | B56 | A15 | 10 | 920 | 60 | 131 | 3 | 67 | 8.2 | 2577 |
| | D57 | B57 | A15 | 10 | 920 | 60 | 104 | 2 | 61 | 8.4 | 2640 |
| | D58 | B58 | A15 | 10 | 920 | 60 | 103 | 2 | 62 | 8.4 | 2631 |
| | D59 | B59 | A15 | 10 | 920 | 60 | 85 | 2 | 57 | 8.2 | 2638 |
| | D60 | B60 | A15 | 10 | 920 | 60 | 99 | 1 | 64 | 8.4 | 2628 |

**[Table 4-3]**

| | Member No. | Steel sheet No. | Steel No. | Heat treatment | | | Coated steel member | | | | |
|---|---|---|---|---|---|---|---|---|---|---|---|
| | | | | Temperature rising rate | Healing temperature | Cooling rate | Thickness of decarburized layer | Thickness of internal oxidized layer | Bending angle | Appropriate welding current range | Tensile strength |
| | | | | (°C/s) | (°C) | (°C/s) | (µm) | (µm) | (°) | (kA) | (MPa) |
| | d1 | b1 | a1 | 100 | 900 | 40 | 53 | 6 | 113 | 8.0 | 920 |
| | d2 | b2 | a2 | 100 | 900 | 40 | 53 | 7 | 42 | 7.4 | 2926 |
| | d3 | b3 | a3 | 100 | 900 | 40 | 54 | 6 | 115 | 7.2 | 866 |
| | d4 | b4 | a4 | 100 | 900 | 40 | 49 | 8 | 104 | 7.4 | 951 |
| | d5 | b5 | a5 | 100 | 900 | 40 | 55 | 6 | 116 | 7.2 | 873 |
| | d6 | b6 | a6 | 100 | 900 | 40 | 54 | 8 | 44 | 7.2 | 2671 |
| | d7 | b7 | A1 | 10 | 900 | 40 | 17 | 7 | 54 | 4.6 | 1234 |
| | as | b8 | A2 | 10 | 900 | 40 | 20 | 7 | 26 | 5.2 | 2734 |
| | d9 | b9 | A3 | 10 | 900 | 40 | 18 | 5 | 47 | 4.8 | 1918 |
| Comparative Example | d10 | b10 | A4 | 10 | 900 | 40 | 16 | 7 | 44 | 4.8 | 2038 |
| | d11 | b11 | A5 | 10 | 900 | 40 | 17 | 7 | 36 | 5.2 | 2348 |
| | d12 | b12 | A6 | 10 | 900 | 40 | 24 | 4 | 51 | 4.8 | 1882 |
| | d13 | b13 | A7 | 10 | 900 | 40 | 20 | 6 | 54 | 4.6 | 1361 |
| | d14 | b14 | A8 | 10 | 900 | 40 | 19 | 6 | 51 | 4.4 | 1590 |
| | d15 | b15 | A9 | 10 | 900 | 40 | 21 | 7 | 49 | 4.6 | 1966 |
| | d16 | b16 | A10 | 10 | 900 | 40 | 20 | 4 | 40 | 4.6 | 2078 |
| | d17 | b17 | A11 | 10 | 900 | 40 | 21 | 7 | 36 | 4.4 | 2178 |
| | d18 | b18 | A12 | 10 | 900 | 40 | 20 | 7 | 37 | 4.6 | 2077 |
| | d19 | b19 | A13 | 10 | 900 | 40 | 10 | 3 | 29 | 4.8 | 2656 |
| | d20 | b20 | A10 | 10 | 900 | 40 | 2 | 60 | 35 | 0.6 | 2070 |
| | d21 | b21 | A11 | 10 | 900 | 40 | 1 | 69 | 30 | 0.6 | 2162 |
| | d22 | b22 | A12 | 10 | 900 | 40 | 3 | 70 | 31 | 0.4 | 2071 |
| | d23 | b23 | A13 | 10 | 900 | 40 | 3 | 57 | 23 | 0.4 | 2655 |

As shown in Tables 4-1 to 4-3, Invention Examples D1 to D60 satisfying the ranges of the present invention obtained good results in terms of both the structure and properties, but Comparative Examples d1 to d23 not satisfying the ranges of the present invention obtained results in which the chemical composition and structure (the depths of the internal oxidized layer and the decarburized layer) were outside of the ranges of the present invention and at least one of the bendability, weldability, and tensile strength did not satisfy the target.

### [Industrial Applicability]

According to the present invention, it is possible to obtain a steel member and a steel sheet having excellent collision properties and having high strength. The steel member according to the present invention is particularly suitable for use as a frame component of a vehicle.

### [Brief Description of the Reference Symbols]

10: Steel sheet
11: Base steel sheet
12: Scale
13: Decarburized layer
14: Internal oxidized layer
110: Steel member
111: Steel sheet substrate
112: Scale
113: Decarburized layer
114: Internal oxidized layer
210: Steel member
211: Steel sheet substrate
213: Decarburized layer
214: Internal oxidized layer
215: Coating

## Claims

1. A steel sheet comprising:
a base steel sheet; and
a scale formed on a surface of the base steel sheet,
wherein the base steel sheet contains, as a chemical composition, by mass%,
C: 0.10% to 0.65%,
Si: 0.10% to 2.00%,
Mn: 0.30% to 3.00%,
P: 0.050% or less,
S: 0.0100% or less,
N: 0.010% or less,
O: 0.010% or less,
Ti: 0% to 0.100%,
B: 0% to 0.0100%,
Cr: 0% to 1.00%,
Mo: 0% to 1.00%,
Ni: 0% to 1.00%,
Nb: 0% to 0.10%,
Cu: 0% to 1.00%,
V: 0% to 1.00%,
Ca: 0% to 0.010%,
Mg: 0% to 0.010%,
Al: 0% to 1.00%,
Sn: 0% to 1.00%,
W: 0% to 1.00%,
Sb: 0% to 1.00%,
Zr: 0% to 1.00%,
Co: 0% to 1.00%,
REM: 0% to 0.30%, and
a remainder including Fe and impurities,
the base steel sheet comprises a decarburized layer formed on a side of an interface with the scale,
the decarburized layer comprises an internal oxidized layer formed on the side of the interface with the scale,
a depth of the decarburized layer from the interface between the base steel sheet and the scale is 90 µm or more,
a depth of the internal oxidized layer from the interface is less than 30 µm, and
the scale contains 80% or more of Fe by mass%.

2. The steel sheet according to claim 1,
wherein the scale includes, by mass%, a first region containing 80% or more of Fe and 0.1% or more and less than 3.0% of Si, and a second region containing 65% or more and less than 80% of Fe and 0.8% or more and less than 7.5% of Mn.

3. A steel member comprising:
a steel sheet substrate; and
a scale formed on a surface of the steel sheet substrate,
wherein the steel sheet substrate contains, as a chemical composition, by mass%,
C: 0.10% to 0.65%,
Si: 0.10% to 2.00%,
Mn: 0.30% to 3.00%,
P: 0.050% or less,
S: 0.0100% or less,
N: 0.010% or less,
O: 0.010% or less,
Ti: 0% to 0.100%,
B: 0% to 0.0100%,
Cr: 0% to 1.00%,
Mo: 0% to 1.00%,
Ni: 0% to 1.00%,
Nb: 0% to 0.10%,
Cu: 0% to 1.00%,
V: 0% to 1.00%,
Ca: 0% to 0.010%,
Mg: 0% to 0.010%,
Al: 0% to 1.00%,
Sn: 0% to 1.00%,
W: 0% to 1.00%,
Sb: 0% to 1.00%,
Zr: 0% to 1.00%,
Co: 0 to 1.00%,
REM: 0% to 0.30%, and
a remainder including Fe and impurities,
the steel sheet substrate comprises a decarburized layer formed on a side of an interface with the scale,
the decarburized layer comprises an internal oxidized layer formed on the side of the interface with the scale,
a depth of the decarburized layer from the interface between the steel sheet substrate and the scale is 60 µm or more,
a depth of the internal oxidized layer from the interface is less than 40 µm, and
the scale contains 70% or more of Fe by mass%.

4. A coated steel member comprising:
a steel sheet substrate; and
a coating containing Al and Fe formed on a surface of the steel sheet substrate,
wherein the steel sheet substrate contains, as a chemical composition, by mass%,
C: 0.10% to 0.65%,
Si: 0.10% to 2.00%,
Mn: 0.30% to 3.00%,
P: 0.050% or less,
S: 0.0100% or less,
N: 0.010% or less,
O: 0.010% or less,
Ti: 0% to 0.100%,
B: 0% to 0.0100%,
Cr: 0% to 1.00%,
Mo: 0% to 1.00%,
Ni: 0% to 1.00%,
Nb: 0% to 0.10%,
Cu: 0% to 1.00%,
V: 0% to 1.00%,
Ca: 0% to 0.010%,
Mg: 0% to 0.010%,
Al: 0% to 1.00%,
Sn: 0% to 1.00%,
W: 0% to 1.00%,
Sb: 0% to 1.00%,
Zr: 0% to 1.00%,
Co: 0% to 1.00%,
REM: 0% to 0.30%, and
a remainder including Fe and impurities,
the steel sheet substrate comprises a decarburized layer formed on a side of the coating,
the decarburized layer comprises an internal oxidized layer formed on the side of the coating,
a depth of the decarburized layer from an interface between the steel sheet substrate and the coating is 30 µm or more,
a depth of the internal oxidized layer from the interface is less than 20 µm, and
no scale is included between the steel sheet substrate and the coating containing Al and Fe.
